# EUROPÄISCHE PATENTANMELDUNG

(11) **EP 2 426 014 A1**
(43) Veröffentlichungstag der Anmeldung: **07.03.2012**
(21) Anmeldenummer: 11178282.7
(22) Anmeldetag: 22.08.2011
(51) Int. Cl.: B60R 11/02, B61L 15/00, B61L 25/02

(54) **Halterung**

(30) Priorität: 07.09.2010 AT 14892010
(71) Anmelder: Tarter, Philipp, 1180 Wien (AT)
(72) Erfinder: Tarter, Philipp, 1180 Wien (AT)
(74) Vertreter: Grabherr, Claudia

(57) **Zusammenfassung**

Halterung (1) zur lösbaren Befestigung eines Moduls (2) an einer magnetisierbaren Fläche (3) eines Fahrzeugs (4), wobei die Halterung (1) mindestens eine Aussparung (5) zur Aufnahme mindestens eines Haftmagneten (6) des Moduls (2) umfasst, sowie Modul (2) mit Befestigungsmitteln zur Befestigung einer derartigen Halterung (1).

## Beschreibung

Die Erfindung betrifft eine Halterung zur lösbaren Befestigung eines Moduls an einer magnetisierbaren Fläche eines Fahrzeugs sowie ein Modul mit Befestigungsmitteln zur lösbaren Befestigung an einer derartigen Halterung.

Im Bereich des Transportwesens und insbesondere im Bereich des Gütertransports auf Straße, Schiene, auf dem Wasser oder in der Luft ist es oft erforderlich, technische, austauschbare Module an den zu transportierenden Objekten anzubringen. Der Gütertransport kann insbesondere Container oder Eisenbahnwaggons umfassen. Bei den Modulen kann es sich insbesondere um Telematikmodule wie beispielsweise Identifikations- oder Ortungsmodule handeln.

Es ist insbesondere bekannt, Satellitenortungsmodule zur Ermittlung der Position von Eisenbahnwaggons an diesen Waggons anzubringen. Dies ermöglicht eine logistische Verfolgung und Ortung von Eisenbahnwaggons, was insbesondere in Hinblick auf die hohen durchschnittlichen Stehzeiten von Güterwaggons im europäischen Schienennetz von Bedeutung ist.

Derartige Telematikmodule sind zum Teil aufwendig aufgebaut und dementsprechend teuer. Beispielsweise enthalten sie Elektronikschaltungen und Energieversorgungsvorrichtungen. Um Schäden durch Diebstahl oder Vandalismus in Grenzen zu halten, ist es erforderlich, die Module möglichst fest mit dem jeweiligen Fahrzeug zu verbinden. Andererseits muss jedoch gewährleistet sein, dass berechtigte Personen das Modul schnell und unkompliziert zu Auswertung, Tausch oder Wartung montieren oder demontieren können.

Aus der AT 502 346 B1 sind Ortungsmodule für Eisenbahnwaggons bekannt, die über Haftmagnete verfügen, mit deren Hilfe ein einfaches Haften an einer Metallfläche eines Eisenbahnwaggons ermöglicht wird. Zusätzlich wird vorgeschlagen, Klebestellen vorzusehen, um die Haftung zu verbessern.

Auch aus der WO 02/095438 A2 sind entsprechende Ortungsgeräte bekannt.

Das Problem bei einer Befestigung des Moduls am Eisenbahnwaggon mittels Haftmagneten besteht nun darin, dass eine derartige Verbindung von nichtberechtigten Personen schnell gelöst werden kann. Auf der anderen Seite kann eine Verbindung mittels eines Klebstoffes von berechtigten Personen nicht ohne Weiteres bzw. ohne Beschädigung des Moduls gelöst werden.

Die technische Aufgabe der vorliegenden Erfindung besteht darin, eine Halterung für ein derartiges Modul vorzusehen, welche einerseits ein schnelles Anbringen und Lösen des Moduls am bzw. vom Fahrzeug erlaubt, und andererseits einen guten Schutz vor Diebstahl gewährleistet.
Diese Aufgabe wird erfindungsgemäß dadurch gelöst, dass die Halterung mindestens eine Aussparung zur Aufnahme mindestens eines Haftmagneten des Moduls umfasst.

Die Halterung wird an einer magnetisierbaren Fläche des betreffenden Fahrzeugs befestigt und das, am Fahrzeug lösbar anzubringende Modul mit Haftmagneten wird derart in die Halterung eingeführt, dass die Haftmagnete in die entsprechende Aussparung der Halterung einschnappen. Dadurch wird erreicht, dass ein Verschieben des Moduls nicht möglich ist, und die Haftmagnete von außen nicht unmittelbar sichtbar sind.
Nicht berechtigten Personen wird der Eindruck vermittelt, dass das Modul unlösbar mit der Halterung und dem Fahrzeug verbunden ist. Darüber hinaus ist erfindungsgemäß vorgesehen, dass die Halterung mindestens ein, mit einem ersten Führungsmittel des Moduls korrespondierendes zweites Führungsmittel umfassen kann.

Derartige Führungsmittel können insbesondere in Form von Führungsschienen und damit korrespondierenden Führungsnuten ausgeführt sein. Beim Einführen des Moduls in die Halterung wird zunächst eine Führungsschiene in eine entsprechende Führungsnut eingeführt, wonach das Modul nur noch in eine Richtung beweglich ist.

Dann wird das Modul solange in die Halterung eingeschoben, bis die Haftmagnete in die entsprechende Aussparung der Halterung einschnappen, wodurch das Modul fest mit dem Fahrzeug verbunden ist. Eine Bewegung des Moduls ist damit so gut wie ausgeschlossen.

Weiters kann erfindungsgemäß ein Anschlag zur mechanischen Stabilisierung des Moduls vorgesehen sein. Für den Fall, dass ein derartiger Anschlag vorgesehen ist, empfiehlt es sich, im Anschlag eine die Einführung eines zur Lösung der mechanischen Haltekraft geeigneten Werkzeugs erlaubende Aussparung vorzusehen. Berechtigte Personen können dann zunächst durch Einführung des geeigneten Werkzeugs die Magneten aus den Aussparungen lösen und durch gezielte Druckanwendung entlang der Führungsschiene das Modul aus der Halterung lösen.

Durch die Führungsmittel und/oder den Anschlag wird nicht berechtigten Personen der Blick auf die Haftmagnete verwehrt, wodurch der Eindruck entsteht, dass das Modul fest und unlösbar mit dem Fahrzeug verbunden ist.

Die Erfindung umfasst weiters auch das Modul selbst, sofern es mit Befestigungsmitteln zur Befestigung an einer erfindungsgemäßen Halterung ausgeführt ist.

Weitere erfindungsgemäße Merkmale sind den Ansprüchen, der Beschreibung und den Figuren zu entnehmen.

Die Erfindung wird im folgenden anhand von Ausführungsbeispielen erklärt. Die Figuren 1 bis 7 zeigen:
Fig. 1: Ein Fahrzeug mit einer erfindungsgemäßen Halterung;
Fig. 2: Die erfindungsgemäße Halterung in dreidimensionaler Ansicht;
Fig. 3: Einen Querschnitt durch ein Modul zur Verwendung in der erfindungsgemäßen Halterung;
Fig. 4: Ansicht der Unterseite eines Moduls zur Verwendung in einer erfindungsgemäßen Halterung;
Fig. 5 bis Fig. 7: Zeigen den Ablauf des Einführens und Einrastens eines Moduls in eine erfindungsgemäße Halterung.

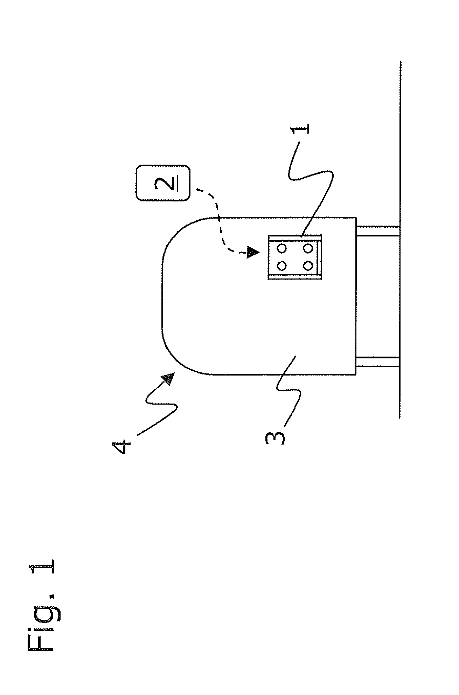

Fig. 1 zeigt ein Fahrzeug 4, beispielsweise einen Eisenbahnwaggon, der eine magnetisierbare Fläche 3 aufweist. Es kann sich dabei um Eisen oder jedes andere ferromagnetische Material handeln. An der magnetisierbaren Fläche ist die erfindungsgemäße Halterung 1 befestigt. Diese Befestigung kann über beliebige Befestigungsmittel erfolgen, beispielsweise Schrauben, Nieten, Bolzen oder auch Klebstoffe. Insbesondere ist vorgesehen, dass die Halterung 1 fest mit dem Fahrzeug verbunden ist. Weiters ist ein Modul 2 gezeigt, welches in die Halterung 1 eingesetzt werden soll. Dies ist durch den strichlierten Pfeil angedeutet. Das Einsetzen und Lösen des Moduls 2 in die bzw. aus der Halterung 1 soll schnell und einfach erfolgen und im eingesetzten Zustand den Eindruck erwecken, dass das Modul 2 fest mit dem Fahrzeug verbunden ist. Bei dem Modul handelt es sich insbesondere um ein Telematikmodul, beispielsweise ein Identifikations- oder Ortungsmodul.

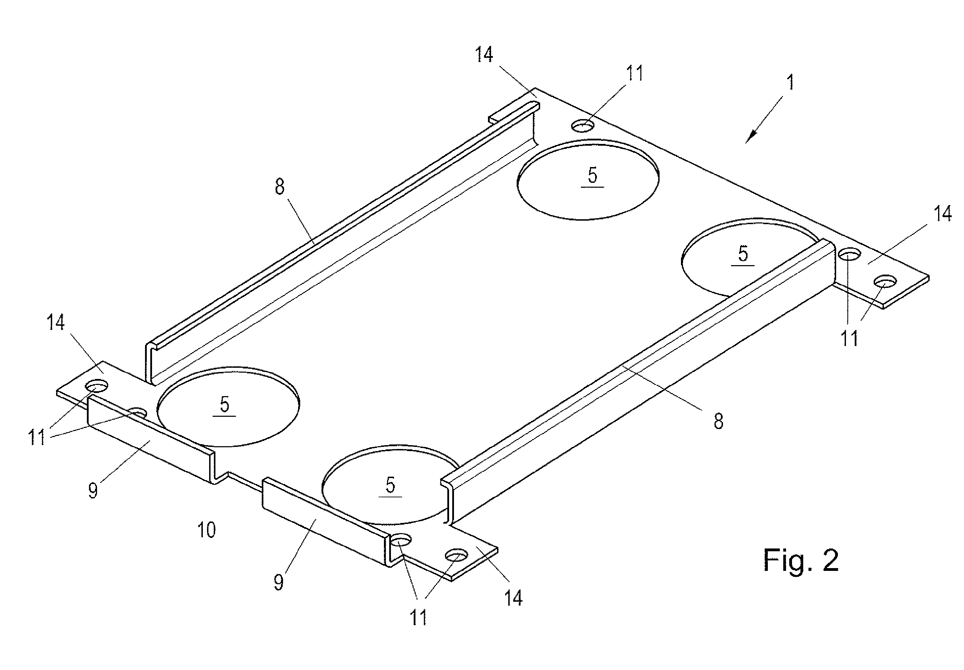

Fig. 2 zeigt eine dreidimensionale Ansicht einer erfindungsgemäßen Halterung 1. Die Halterung 1 verfügt über Aussparungen 5, welche derart ausgeführt sind, dass sie Haftmagnete aufnehmen können, die an dem einzusetzenden Modul befestigt sind. Die Dicke der Halterung kann so gewählt sein, dass die Haftmagnete im eingeschnappten Zustand in den Aussparungen 5 verschwinden und von außen nicht sichtbar sind.

Weiters verfügt die Halterung 1 über zweite Führungsmittel 8 in Form von hochgebogenen Führungsschienen. Diese Führungsschienen korrespondieren zu entsprechenden zweiten Führungsmitteln 7 in dem zu befestigenden Modul. Am Stirnende der Halterung 1 ist ein Anschlag 9 vorgesehen, der einerseits das eingesetzte Modul mechanisch weiter stabilisiert, und andererseits den Blick auf die Haftmagnete verhindert. Der Anschlag 9 verfügt über eine Aussparung 10, um berechtigten Personen die Möglichkeit zu geben, durch entsprechend einzusetzendes Werkzeug das Modul 2 von der Halterung 1 zu lösen.

Weiters verfügt die Halterung 1 über Laschen 14 mit Öffnungen 11, die im vorliegende Ausführungsbeispiel als Bohrungen ausgeführt sind und eine Verschraubung der Halterung mit dem Fahrzeug erlauben.

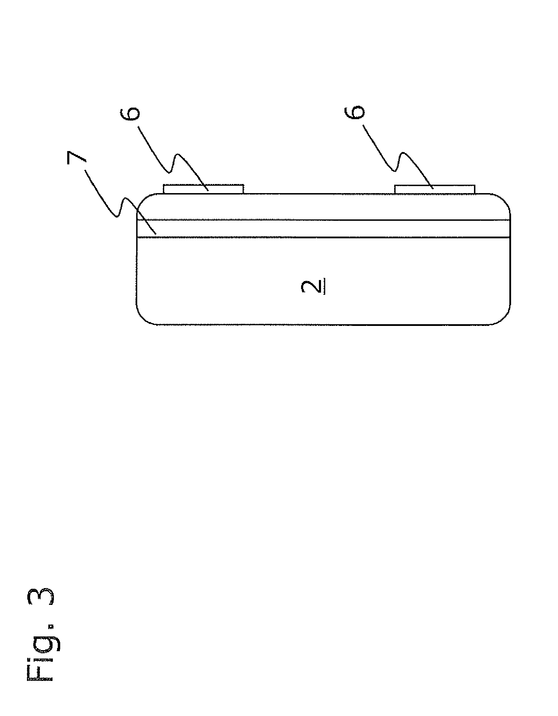

Fig. 3 zeigt einen Querschnitt durch ein Modul 2, welches ein erstes Führungsmittel 7 in Form einer Führungsnut sowie Haftmagnete 6 an der Unterseite des Moduls aufweist.

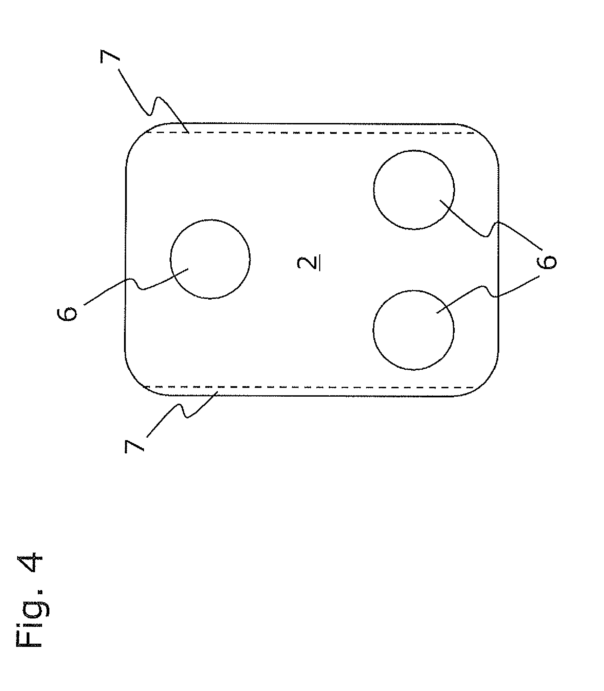

Fig. 4 zeigt eine Ansicht der Unterseite des Moduls 2 mit drei Haftmagneten 6 und an den Längsseiten die ersten Führungsmittel 7, die in Form von Führungsschienen ausgeführt sind. Durch die Anordnung der Haftmagnete 6 im Dreieck wird gewährleistet, dass die Haftmagnete 6 erst in die Aussparungen 5 einschnappen, wenn das Modul 2 vollständig in die Halterung 1 eingeführt ist.

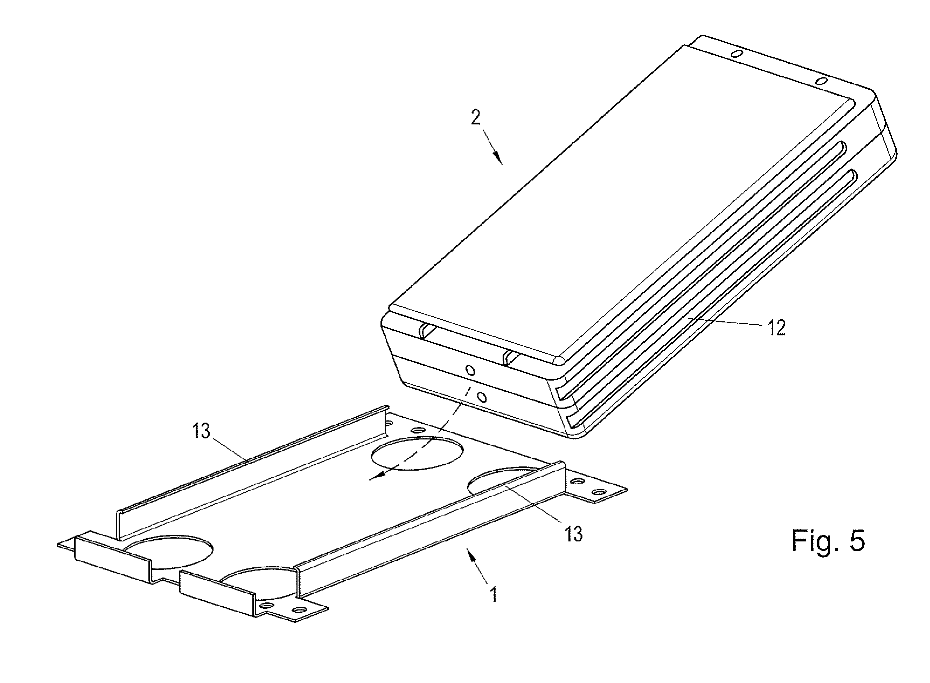

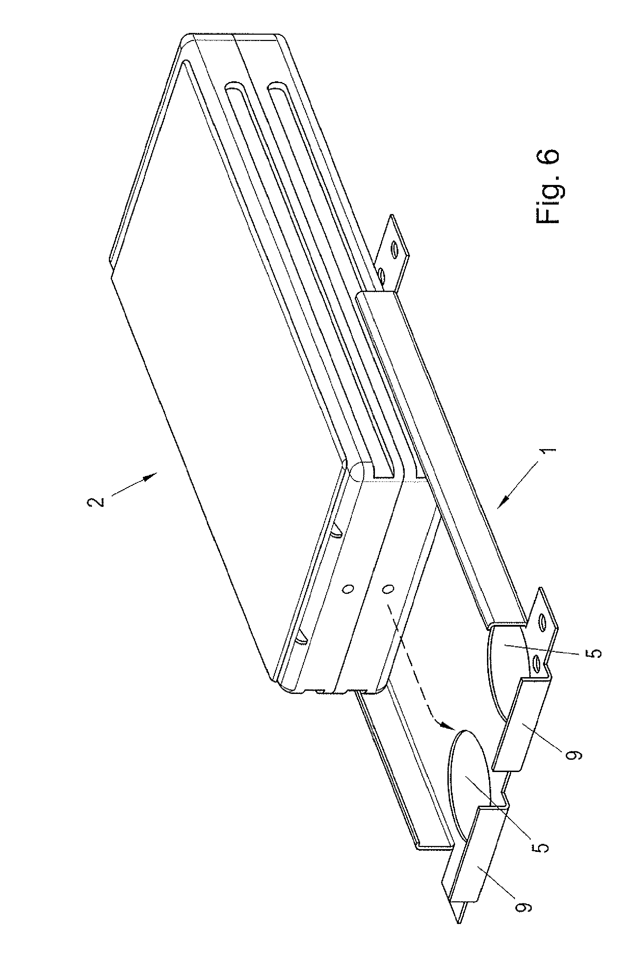

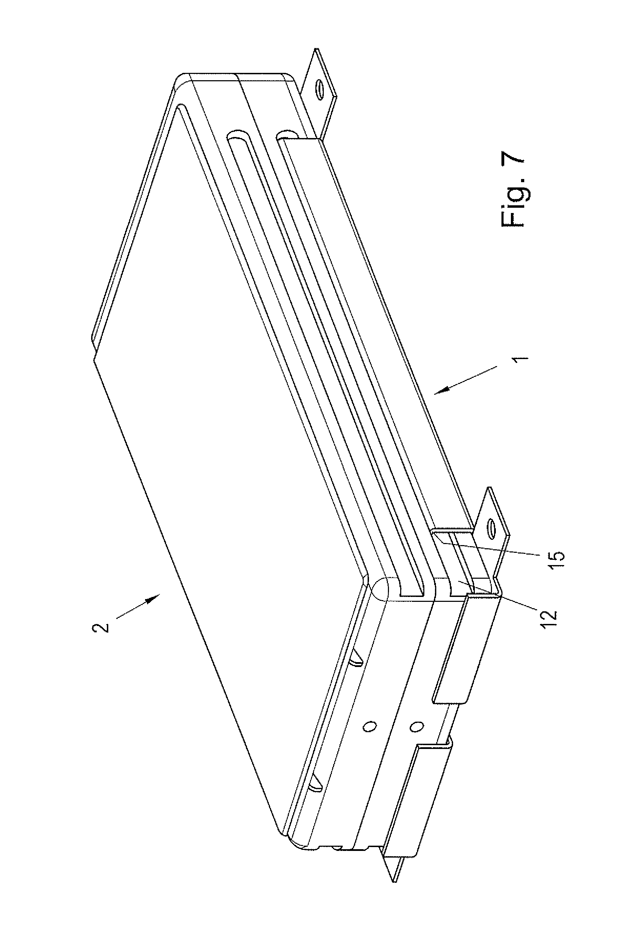

Die Figuren 5 bis 7 zeigen Momentaufnahmen des Montagevorgangs unter Verwendung der erfindungsgemäßen Halterung. Um das Modul 2 in die am Fahrzeug befestigte Halterung 1 einzusetzen, wird in einem ersten Schritt (Fig. 5) die Führungsnut 12 des Moduls 2 in die Führungsschiene 13 der Halterung 1 eingesetzt. Dies ist durch den strichlierten Pfeil angedeutet. Danach wird das Modul 2 in der Führungsschiene bis zum Anschlag 9 weitergeschoben (Fig. 6). Wenn das Modul 2 vollständig in die Halterung eingeschoben ist, rasten die Haftmagneten 6 in die Aussparungen 5 ein und der Zustand aus Fig. 7 tritt ein. In diesem eingerasteten Zustand sind die Haftmagneten von außen nicht sichtbar.

In diesem Ausführungsbeispiel ist der nach innen ragende Vorsprung 15 der Führungsschiene 13 mindestens um die Dicke der Haftmagnete 6 schmäler ist als die Weite der Führungsnut 12, um zu erreichen, dass ein entsprechendes Spiel zum Einschnappen bzw. Lösen der Haftmagnete in die Aussparungen möglich ist.

Die Erfindung beschränkt sich nicht auf die gezeigten Ausführungsbeispiele und umfasst insbesondere nicht nur die Halterung selbst, sondern auch ein Modul mit Befestigungsmitteln, welche zur Befestigung an einer erfindungsgemäßen Halterung ausgeführt sind. Das verwendete Modul kann jegliches Bauelement umfassen, welches Teil eines größeren Systems ist. Insbesondere kann es sich bei dem Modul um ein Telematikmodul, ein Identifikations- oder Ortungsmodul handeln.

### Bezugszeichenliste

- 1: Halterung
- 2: Modul
- 3: Magnetisierbare Fläche
- 4: Fahrzeug
- 5: Aussparung
- 6: Haftmagnet
- 7: Erstes Führungsmittel
- 8: Zweites Führungsmittel
- 9: Anschlag
- 10: Aussparung
- 11: Öffnung
- 12: Führungsnut
- 13: Führungsschiene
- 14: Lasche
- 15: Vorsprung

## Patentansprüche

1. Halterung (1) zur lösbaren Befestigung eines Moduls (2) an einer magnetisierbaren Fläche (3) eines Fahrzeugs (4), **dadurch gekennzeichnet, dass** die Halterung (1) mindestens eine Aussparung (5) zur Aufnahme mindestens eines Haftmagneten (6) des Moduls (2) umfasst.

2. Halterung (1) nach Anspruch 1, **dadurch gekennzeichnet, dass** die Halterung (1) mindestens ein, mit einem ersten Führungsmittel (7) des Moduls (2) korrespondierendes zweites Führungsmittel (8) umfasst.

3. Halterung (1) nach Anspruch 1 oder 2, **dadurch gekennzeichnet, dass** die Halterung (1) mindestens einen Anschlag (9) zur mechanischen Stabilisierung des Moduls (2) aufweist.

4. Halterung (1) nach Anspruch 3, **dadurch gekennzeichnet, dass** der Anschlag (9) eine die Einführung eines zur Lösung der magnetischen Haltekraft geeigneten Werkzeugs erlaubende Aussparung (10) aufweist.

5. Halterung (1) nach einem der Ansprüche 2 bis 4, **dadurch gekennzeichnet, dass** die zweiten Führungsmittel (8) derart ausgeführt sind, dass die Aussparungen (5) und die Haftmagnete (6) bei befestigtem Modul von außen nicht sichtbar sind.

6. Halterung (1) nach einem der Ansprüche 1 bis 5, **dadurch gekennzeichnet, dass** die Halterung (1) seitliche Laschen (14) zur Befestigung der Halterung (1) am Fahrzeug (3) umfasst.

7. Halterung (1) nach Anspruch 6, **dadurch gekennzeichnet, dass** die seitlichen Laschen (14) mit Öffnungen (11) zur Aufnahme von Befestigungsmitteln versehen sind.

8. Halterung (1) nach einem der Ansprüche 2 bis 7, **dadurch gekennzeichnet, dass** das erste Führungsmittel (7) als Führungsnut (12) und das zweite Führungsmittel (8) als Führungsschiene (13) ausgeführt ist.

9. Halterung (1) nach einem der Ansprüche 1 bis 8, **dadurch gekennzeichnet, dass** die Dicke der Aussparung (5) mindestens gleich der Dicke der Haftmagneten (6) des Moduls (2) ist.

10. Modul (2) mit Befestigungsmitteln, **dadurch gekennzeichnet, dass** die Befestigungsmittel zur Befestigung an einer Halterung (1) gemäß einem der Ansprüche 1 bis 9 ausgeführt ist.
